# EUROPEAN PATENT SPECIFICATION

(11) **EP 3 010 289 B1**
(45) Date of publication and mention of the grant of the patent: **25.07.2018**
(21) Application number: 15188983.9
(22) Date of filing: 08.10.2015
(51) Int. Cl.: H04W 52/02, H04W 48/02, H04W 84/12

(54) **METHOD AND APPARATUS FOR CONTROLLING SIGNAL TRANSMISSION AND COMPUTER PROGRAM PRODUCT**
VERFAHREN UND VORRICHTUNG ZUR SIGNALÜBERTRAGUNGSSTEUERUNG UND COMPUTERPROGRAMMPRODUKT
PROCÉDÉ ET APPAREIL DE COMMANDE DE TRANSMISSION DE SIGNAL ET PRODUIT PROGRAMME INFORMATIQUE

(30) Priority: 17.10.2014 CN 201410555668
(43) Date of publication of application: 20.04.2016
(73) Proprietor: Xiaomi Inc., Beijing 100085 (CN)
(72) Inventor: HUANG, Qiuzhi, Haidian District, Beijing 100085 (CN); FAN, Jialin, Haidian District, Beijing 100085 (CN); QU, Heng, Haidian District, Beijing 100085 (CN)
(74) Representative: Reeve, Nicholas Edward

(56) References cited:
- EP-A1- 2 595 433
- WO-A1-2004/075583
- WO-A1-2010/006142
- US-A1- 2012 039 225
- US-A1- 2012 052 793
- US-B1- 8 611 268

## Description

### TECHNICAL FIELD

The present disclosure relates to a field of communication technology, and more particularly to a method and an apparatus for controlling a signal transmission, and an electronic device.

### BACKGROUND

An AP (Access Point, wireless access point) may periodically send beacon (beacon frame) signals, so that a surrounding STA (a station or a terminal) may discover a corresponding wireless network established through the AP by listening to the beacon signals. This is a "passive scanning" process in discovering the wireless network.

In the process of passive scanning, since the STA only needs to listen to the beacon signals, without sending detection signals actively, it facilitates the reduction of the power consumption of the STA. However, when there is no surrounding STA to access, the transmission of the beacon signals is a waste of wireless resources, and results in the power consumption of the AP being increased.
WO2004/075583 relates to the reduction of electrosmog by switching a base station to a sleep mode, in which no beacon signals are transmitted, after a predefines time interval without a connection signal to a mobile network unit. US2012/0039225 describes method for saving the power consumption of a wireless access point by switching the wireless access point into a power-saving mode wherein the wireless access point only receives wireless signals if the wireless access point has not received a wireless signal matching the standard frame format within a predetermined time. WO2010/006142 relates to a power save mode for access points wherein the access point transitions to a power save mode based on whether a client station communicates with the access point during a predetermined period of time.

### SUMMARY OF THE INVENTION

The present disclosure provides a method and an apparatus for controlling a signal transmission and an computer program product as defined by the independent claims in order to solve the technical problem in the related art that the transmission of beacon frames results in the excessively high power consumption of the AP.

According to a first aspect of the present disclosure, there is provided a method for controlling a signal transmission, including: detecting whether there is a terminal that requests to establish a wireless connection; and if there is not the terminal, switching a sending function of beacon frames to an off or closed state, and maintaining a reception of probe request frames.

The method further including: judging whether a wireless connection has been ever established with a sending terminal of the probe request frames when the probe request frames are received; and if the wireless connection has been established, switching the sending function into an on or open state.

Optionally, the detecting whether there is a terminal that requests to establish a wireless connection includes: detecting whether there is a terminal that requests to establish a wireless connection in a continuous time period of a preset time length.

The method further includes: if the wireless connection hasn't been ever established, recording the accumulated number of the probe request frames received from the sending terminal; and switching the sending function into the open state when the accumulated number are greater than or equal to a preset number.

Optionally, the judging whether a wireless connection has been ever established with a sending terminal of the probe request frames includes: acquiring identification information of the sending terminal of the probe request frames; and finding whether a historical connection device that matches with the identification information of the sending terminal exists in a preset historical database; wherein, if the historical connection device exists, judging that the wireless connection has been ever established.

Optionally, the method further includes: adding the identification information of the sending terminal into a preset blacklist if an operation of establishing the wireless connection with the sending terminal fails, when the wireless connection has been not ever established with the sending terminal; wherein, a state switching operation of the sending function is irrelevant to the probe request frames received from a terminal in the blacklist.

According to a second aspect of the present disclosure, there is provided an apparatus for controlling a signal transmission, including: a detection unit configured to detect whether there is a terminal that requests to establish a wireless connection; and a processing unit configured to switch a sending function of beacon frames into a close state, and maintain a reception of probe request frames in the case of detecting that there is not the terminal.

The apparatus further includes: a judging unit configured to judge whether a wireless connection has been ever established with a sending terminal of the probe request frames when the probe request frames is received; and a first switching unit configured to switch the sending function into an open state when judging that the wireless connection has been ever established.

The apparatus further includes: a recording unit configured to record the accumulated number of the probe request frames received from the sending terminal when judging that the wireless connection has been not ever established; and a second switching unit configured to switch the sending function into the open state when the accumulated number are greater than or equal to a preset number.

Optionally, the detection unit includes: a detection sub-unit configured to detect whether there is a terminal that requests to establish a wireless connection in a continuous time period of a preset time length.

Optionally, the judging unit includes: an acquisition sub-unit configured to acquire identification information of the sending terminal of the probe request frames; and a finding sub-unit configured to find whether a historical connection device that matches with the identification information of the sending terminal exists in a preset historical database, and judge that the wireless connection has been ever established if the historical connection device exists.

Optionally, the apparatus further includes: an adding unit configured to add the identification information of the sending terminal into a preset blacklist if an operation of establishing the wireless connection with the sending terminal fails, when the wireless connection has been not ever established with the sending terminal; wherein, a state switching operation of the sending function is irrelevant to the probe request frames received from a terminal in the blacklist.

According to a further aspect of the present disclosures there is provided a computer program product having a computer program stored thereon, wherein when the computer program is executed on the processor of a computer, the computer performs the method as discussed above for the first aspect.

The technical solutions provided by the embodiments of the present disclosure may include the following advantageous effects: By detecting the requirement of the STA (terminal) around the AP to establish the wireless connection, the present disclosure may stop sending the signal of the beacon frames in the case that the requirement of establishing the wireless connection does not exist, so that the AP enters into a "sleep" state, thus avoiding the waste of resources and reducing the power consumption of the AP. Meanwhile, by maintaining the reception of the probe request frames, the present disclosure may still maintain the detection and judgment of the requirement of the surrounding STA when the AP is in the "sleep" state, thus avoiding the influence of the normal wireless connection of the STA.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for controlling a signal transmission according to an exemplary embodiment.
Fig. 2 is a flow chart illustrating a method for controlling another signal transmission according to an exemplary embodiment.
Fig. 3 is a flow chart illustrating a method for controlling another signal transmission according to an exemplary embodiment.
Fig. 4 is a flow chart illustrating a method for controlling another signal transmission according to an exemplary embodiment.
Fig. 5 is a block diagram illustrating an apparatus for controlling a signal transmission according to an exemplary embodiment.
Fig. 6 is a block diagram illustrating an apparatus for controlling another signal transmission according to an exemplary embodiment.
Fig. 7 is a block diagram illustrating an apparatus for controlling another signal transmission according to an exemplary embodiment.
Fig. 8 is a block diagram illustrating an apparatus for controlling another signal transmission according to an exemplary embodiment.
Fig. 9 is a block diagram illustrating an apparatus for controlling another signal transmission according to an exemplary embodiment.
Fig. 10 is a block diagram illustrating an apparatus for controlling another signal transmission according to an exemplary embodiment.
Fig. 11 is a structure diagram illustrating an apparatus for controlling a signal transmission according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

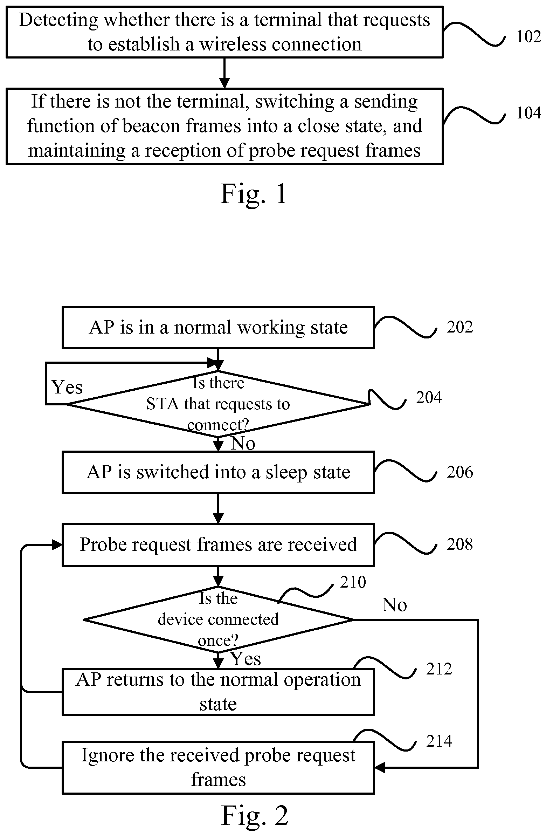

Fig. 1 is a flow chart illustrating a method for controlling a signal transmission according to an exemplary embodiment. As shown in Fig. 1, the method is used in the AP, and includes the following steps.

In step 102, whether there is a terminal that requests to establish a wireless connection is detected.

In the present embodiment, the AP may be a simple AP, and is only used to compile and convert a wireless internet the wireless into a wireless coverage network, which corresponds to a "switch" applied in a wireless network environment. Or, the AP may also be an extended AP, i.e., a wireless router. Herein, the AP may be an independent device, or may also be a functional module integrated in other device, for example, a WIFI (Wireless Fidelity) module configured with a function of "hotspot" and integrated in a smart terminal.

In the present embodiment, as an exemplary embodiment, when a probe request sent by the terminal is received, it is determined that the terminal requests to establish the wireless connection. Other ways of determining the terminal connection establishment intention may also be applied in the technical solution of the present disclosure.

In step 104, if there is not such a terminal, the sending function of the beacon frames by the AP is switched into an off or close stated, in which no beacon frames are transmitted. However, the AP remains in a monitoring mode for the reception of probe request frames transmitted by terminals.

In the present embodiment, as an exemplary embodiment, "whether there is a terminal that requests to establish a wireless connection" may be judged. If there is not the terminal, the sending function of the beacon frames is switched into the closed or off state. As another exemplary embodiment, a time length of judging "the terminal that requests to establish the wireless connection does not exist" may also be recorded at the same time, and the sending function of the beacon frames is switched into the closed or off state only when there is not the terminal that requests to establish the wireless connection in a continuous time period of a preset time length.

It will be understood from the above described embodiment that, the present disclosure may switch the sending function of the beacon frames into the close state in the case that there is not the terminal, by detecting whether there is a terminal that requests to establish a wireless connection, thus reducing the sending of the beacon frames as much as possible. For example, when a user works in a company, a wireless router in the home may automatically stop the sending of the beacon frames, greatly reducing the power consumption.

Referring to Fig. 2, it is a flow chart illustrating a method for controlling another signal transmission according to an exemplary embodiment. The method includes the following steps.

In step 202, in the case of a normal situation, an AP is in a normal operation state, that is, the AP sends the beacon frames according to a preset period, and receives the probe request frames from a STA.

In the present embodiment, in order to facilitate the description, the "normal operation state" is used, so as to distinguish from a subsequent "sleep state". Herein, in the normal operation state, the AP sends the beacon frames outward, so as to so as to achieve a passive scanning of the STA to the wireless network established by the AP. Meanwhile, the AP receives the probe request frames from the STA, so as to achieve an active scanning to the wireless network established by the AP through the STA.

In step 204, whether there is a STA that requests to establish the wireless connection with the AP is detected, and if there is the STA, the request is responded and the procedure continues to perform a judgment, otherwise the procedure proceeds to step 206.

In the present embodiment, "whether the probe request frames sent by the STA is received" may be used as a judgment condition, to determine whether the corresponding STA has a connection request, wherein, if the probe request frames are received, it is judged that a corresponding STA requests to establish the wireless connection, otherwise, it is judged that there is not the STA that requests to establish the wireless connection.

In the present embodiment, a preset time length, such as one minute, may be set. In this case, if there is a STA that requests to establish the wireless connection in a continuous time period, which is greater than or equal to a preset time length, it is judged that there is not the STA that requests to establish the wireless connection and the procedure proceeds to step 206; and if the STA that requests to establish the wireless connection is detected in the period of one minute, it is required to retime.

In step 206, the AP is switched from a normal operation state to a sleep state, in which the AP will stop sending the beacon frames, and maintain the sending of the probe request frames by the STA.

In the present embodiment, for example, when the user works in the company during the day, no user continues to use the wireless router in the home, and no device needs to establish the wireless connection. If the beacon frames are continued to be transmitted, it wastes resources and energy consumption. Therefore, by switching the AP to the sleep state, temporarily stop sending the beacon frames, but maintaining an operational mode for receiving the probe request frames, a waste of energy consumption because of the sending of the beacon frames can be avoided. On the other hand, the device, such as the smart phone and the like, may actively send the probe request frames to wake up the AP at a time when the user gets home from work, avoiding the influence of the normal use of the user.

In step 208, when the probe request frames sent by a device are received, the procedure proceeds to step 210.

In step 210, identification information of the device sending the probe request frames is acquired, and whether the AP has established the wireless connection with the device is determined, that is, whether the device is a strange or unrecognized device. Herein, if the wireless connection has been established, the procedure proceeds to step 212, otherwise, it indicates that the current device is an unrecognized device, and the procedure proceeds to step 214.

In the present embodiment, the identification information may be MAC (Media Access Control) address, and the like, and be used to identify and distinguish different hardware devices.

In the present embodiment, the AP may record the identification information of the corresponding device every time the wireless connection established with the device is completed, so as to establish a "historical database". Then, whether the current STA sending the probe request frames is an unrecognized device may be determined by matching with the identification information in the historical database. Devices not yet found in the historical database will be considered unrecognized.

In step 212, the AP returns to a normal operation state, and resends the beacon frames.

When the STA is recognized, the AP may be woken up to the normal operation state, and so may enters into a safe and stable work environment. When it is detected that the STA is not the unrecognized device (that is it is a recognized device), there is high probability that the device needs to establish the wireless connection, for example, in the case that employees come to the company simultaneously or subsequently if the AP is a wireless router of the company, and the user and other family members get back home simultaneously or subsequently if the AP is a wireless router used in a family, and in these cases, the AP returns to the normal operation state, thus satisfying all users' use requirements.

In the present embodiment, based on the received probe request frames, the AP may make a normal response process, for example, return a probe response frame to the STA sending the probe request frames.

In step 214, the received probe request frames from an unrecognized device is ignored.

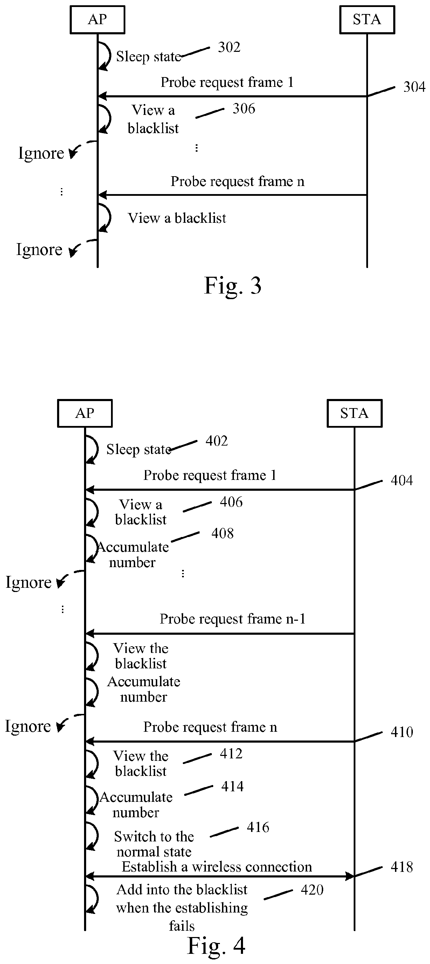

Based on the technical solution of the present disclosure, in addition that the probe request frames from the unrecognized device is directly ignored in step 214, other processing manners may be also used. Now, the detailed description will be made by referring to Fig. 3 and Fig. 4, an application scene of the corresponding technical solution include: an AP and a STA that has been not ever established a wireless connection with the AP. For example, the AP may be the wireless router in a user's home, and the STA is a smart phone of a stranger which passes a house or location where the AP is located.

Referring to Fig. 3, it is a flow chart illustrating a method for controlling another signal transmission according to an exemplary embodiment. The method includes the following steps.

In step 302, an AP is switched from a normal operation state to a sleep state based on the processes of step 202 to step 206 shown in Fig. 2.

In step 304, a probe request frame 1 from a STA is received.

In step 306, identification information of the STA is acquired from the probe request frame 1, for example, MAC address of the STA, and whether there is identification information matched with a blacklist is viewed.

Herein, if there is matched identification information, the probe request frame 1 received by the AP is directly ignored, and no matter how many number of times the STA sends the probe request frames, the received probe request frames are ignored as long as it is determined that the MAC address of the corresponding STA is recorded in the blacklist. This does not affect the running state of the AP, that is, the AP may not return from the sleep state to the normal operation state based on this detection.

In the present embodiment, the devices in the blacklist may have security risk, or attempted to establish a connection but failed. Therefore, by comparing the STA sending the probe request frames and the blacklist, it is contributes to a reduction in the number of times that the AP is woken up, improves the security and reduces the power consumption of the AP.

In the present embodiment, there should be no intersection between the historical database stored by the AP and the blacklist. Thus, the identification information of the STA may be matched with the blacklist firstly, and if it is a unrecognized device, the identification information is matched with the blacklist. Or, the identification information may also be matched with the blacklist firstly, and is further matched with the historical database if there is no risk.

Referring to Fig. 4, Fig. 4 is a flow chart illustrating a method for controlling another signal transmission according to an exemplary embodiment. The method includes the following steps.

In step 402, an AP is switched from a normal operation state to a sleep state based on the processes in step 202 to step 206 shown in Fig. 2.

In step 404, a probe request frame 1 is received from a STA.

In step 406, the STA is matched with a preset blacklist when the STA is determined as a unrecognized device (it is judged by the step 210 shown in Fig. 2).

In step 408, if there is not the device matched with the blacklist, the number of the probe request frames from the STA received by the AP in the preset time period is accumulated, for example, the recorded number in the example is 1.

A preset number n is preset in the AP. When the recorded number is less than the preset number n, the probe request frames received currently is ignored. For example, assuming n=3, the received probe request frame 1 is ignored.

In the preset time period, the processing manner similar to that of the probe request frame 1 may be used when the AP continues to receive the probe request frames from the STA, that is, the received numbers are recorded and the probe request frames at this time are ignored.

In step 410, a probe request frame n from the STA is received.

In step 412, when the STA is determined as a unrecognized device, the STA is compared with the preset blacklist.

In step 414, if there is not a device in the blacklist matching the STA, the number of the probe request frames from the STA received by the AP in the preset time period is accumulated, for example, the recorded number currently is updated to n.

Since the recorded number n is equal to the preset number n, the procedure proceeds to step 416.

In step 416, an operation state of the AP is switched from a sleep state to a normal state, that is, the AP returns to sending the beacon frames.

In step 418, the AP attempts to establish a wireless connection with the STA, for example, return a probe response frame to the STA, and continues to interact with other signals.

In step 420, a result of establishing the wireless connection between the AP and the STA is determined. If the establishment fails, the identification information (such as a MAC address) of the STA is added into the blacklist, and when the AP receives the probe request frames from the STA in the sleep state, the AP directly ignores the received probe request frames in the processing manner shown in Fig. 3, and doesn't switch the operation state of the AP.

Corresponding to the embodiments of the aforesaid method for controlling a signal transmission, the present disclosure also provides the embodiments of an apparatus for controlling a signal transmission.

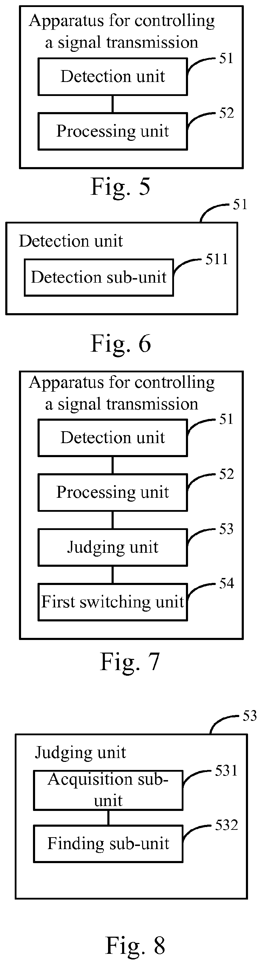

Fig. 5 is a block diagram illustrating an apparatus for controlling a signal transmission according to an exemplary embodiment. Referring to Fig. 5, the apparatus includes a detection unit 51 and a processing unit 52.

Herein, the detection unit 51 is configured to detect whether there is a terminal that requests to establish a wireless connection; and the processing unit 52 is configured to switch a sending function of beacon frames into a closed or off state, and maintain a reception of probe request frames in the case of detecting that there is not such a terminal.

In the above described embodiments, by detecting the requirement of the STA (terminal) around the AP to establish the wireless connection, the sending the signal of the beacon frames may be stopped in the case that the requirement of establishing the wireless connection does not exist, so that the AP enters into a "sleep" state, thus avoiding the waste of resources and reducing the power consumption of the AP. Meanwhile, by maintaining the reception of the probe request frames, the present disclosure may still maintain the detection and judgment of the requirement of the surrounding STA when the AP is in the "sleep" state, thus avoiding the influence of the normal wireless connection of the STA.

As shown in Fig. 6, Fig. 6 is a block diagram illustrating an apparatus for controlling another signal transmission according to an exemplary embodiment, the embodiment is based on the embodiment shown in aforesaid Fig. 5, the detection unit 51 may include: a detection sub-unit 511 configured to detect whether there is a terminal that requests to establish a wireless connection in a continuous time period of a preset time length.

In the above described embodiment, as an exemplary embodiment, "whether there is a terminal that requests to establish a wireless connection" may be judged, and the length of time in which "the terminal that requests to establish the wireless connection does not exist" may be recorded. The sending function of the beacon frames is switched into the close state when there is not the terminal that requests to establish the wireless connection in a continuous time period of a preset time length. As another exemplary embodiment, "whether there is a terminal that requests to establish a wireless connection" may be judged only, and if there is not the terminal, the sending function of the beacon frames is switched into the close state.

As shown in Fig. 7, Fig. 7 is a block diagram illustrating an apparatus for controlling another signal transmission according to an exemplary embodiment, which is based on the embodiment shown in aforesaid Fig. 5, and the apparatus may further include: a judging unit 53 and a first switching unit 54.

Herein, the judging unit 53 is configured to judge whether a wireless connection has been ever established with a sending terminal of the probe request frames when the probe request frames are received; and the first switching unit 54 is configured to switch the sending function into an open state when judging that the wireless connection has been ever established.

In the above described embodiment, by detecting the probe request frames sent by the unrecognized device, the AP returns to the normal operation state. Thus, when the device that wants to establish the wireless connection exists, the AP may satisfy all users' requirements.

It should be noted that, the structure of the judging unit 53 and the first switching unit 54 in the aforesaid apparatus embodiment shown in Fig. 7 may also be included in the apparatus embodiment shown in the aforesaid Fig. 6, and the present disclosure does not limit to this.

As shown in Fig. 8, Fig. 8 is a block diagram illustrating an apparatus for controlling another signal transmission according to an exemplary embodiment, which is based on the embodiment shown in aforesaid Fig. 7. The judging unit 53 may include: an acquisition sub-unit 531 and a finding sub-unit 532.

Herein, the acquisition sub-unit 531 is configured to acquire identification information of the sending terminal of the probe request frames; and the finding sub-unit 532 is configured to find whether a historical connection device that matches with the identification information of the sending terminal exists in a preset historical database, and if the historical connection device exists, judge that the wireless connection has been ever established.

In the above described embodiment, the AP may record the identification information of the corresponding device every time the wireless connection established with the device is completed, so as to establish a "historical database", and whether the current STA sending the probe request frames is a unrecognized device may be determined by matching with the identification information in the historical database.

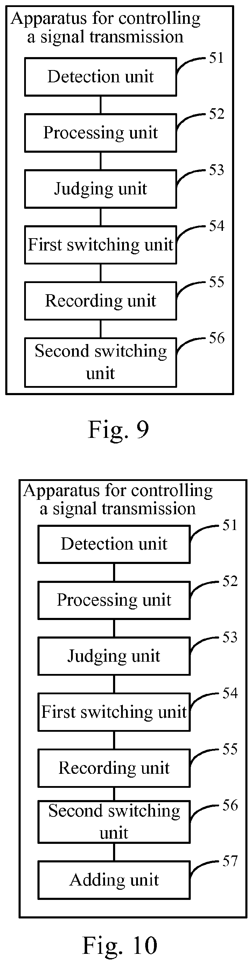

As shown in Fig. 9, Fig. 9 is a block diagram illustrating an apparatus for controlling another signal transmission according to an exemplary embodiment, which is based on the embodiment shown in aforesaid Fig. 7. The apparatus may further include: a recording unit 55 and a second switching unit 56.

Herein, the recording unit 55 is configured to record the accumulated number of the probe request frames received from the sending terminal when judge that the wireless connection has been not ever established; and the second switching unit 56 is configured to switch the sending function into the open state when the accumulated number are greater than or equal to a preset number.

In the above described embodiment, when the accumulated number of the probe request frames received from the same STA are littler (for example, less than the preset number), it indicates that the STA may likely just go pass and the requirement of establishing the wireless connection may not exist, and it is not required to respond or switch the operation state. When the accumulated number of the probe request frames received from the same STA are more (for example, larger than or equal to the preset number), it indicates that the STA does not move in a wide range, and it is likely that the STA wants to establish the wireless connection. Moreover, if there are other similar devices around the STA, the operation state of the AP is switched, so as to satisfy the requirements of all devices. Herein, the AP may ignore all probe request frames of the STA, and realize that the STA scans the AP only by sending the beacon frames, or the AP may respond to the last probe request frame sent by the STA, that is, return the probe response frame.

As shown in Fig. 10, Fig. 10 is a block diagram illustrating an apparatus for controlling another signal transmission according to an exemplary embodiment, which is based on the embodiment shown in aforesaid Fig. 9. The apparatus may further include: an adding unit 57.

Herein, the adding unit 57 is configured to add the identification information of the sending terminal into a preset blacklist if an operation of establishing the wireless connection with the sending terminal fails, when the wireless connection has been not ever established with the sending terminal.

Herein, a state switching operation of the sending function is irrelevant to the probe request frames received from a terminal in the blacklist.

In the above described embodiment, with the blacklist mechanism, the response to the STA recorded in the blacklist will be avoided, thus facilitating the improvement of the security of the AP and reducing the power consumption of the AP. Meanwhile, when the STA cannot successfully establish the wireless connection, it indicates that the current waking to the AP is a waste, the AP need to be in the normal operation state in a period time, and there is a larger possibility that a device to establish the wireless connection may not exist. Therefore, by adding the STA that cannot successfully establish the wireless connection into the blacklist, it may be avoided to be waked up by the STA next time, thus facilitating the reduction of the power consumption of the AP.

With regard to the apparatus in the above described embodiment, detailed description of specific manner for conducting operation of modules has been made in the embodiment related to the method, and no detailed illustration will be made herein.

For the apparatus embodiment, since it basically corresponds to the method embodiment, the relevant contents may refer to part of the descriptions in the method embodiment. The apparatus embodiment described above is only schematically, wherein the unit described as a separating component may be or may also not be physically separated, the component used as a cell display may be or may also not be a physical unit, i.e., it may be located in one place, or may also be distributed to a plurality of network units. Some or all of the modules may be selected to realize the purpose of the present disclosure solution according to the actual needs. Those skilled in the art may understand and implement the present disclosure without any creative labor.

Correspondingly, the present disclosure further provides an apparatus for controlling a signal transmission, including: a processor; and a memory for storing instructions executable by the processor; wherein the processor is configured to: detect whether there is a terminal that requests to establish a wireless connection; and if there is not the terminal, switch a sending function of beacon frames into a close state, and maintain a reception of probe request frames.

Correspondingly, the present disclosure further provides a terminal, including a memory and one or more programs, wherein the one or more programs are stored in the memory, and configured to be executable by one or more processors, wherein the one or more programs includes instructions to cause operations as follows: detecting whether there is a terminal that requests to establish a wireless connection; and if there is not the terminal, switching a sending function of beacon frames to a close state, and maintaining a reception of probe request frames.

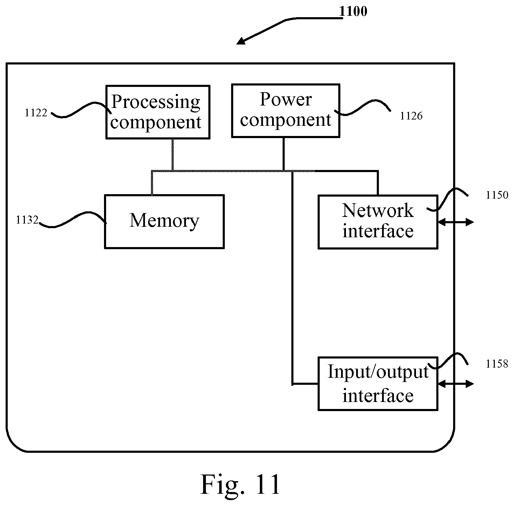

Fig. 11 is a block diagram of a device 1100 for controlling a signal transmission according to an exemplary embodiment. For example, the device 1100 may be provided as an AP, a wireless router, and a mobile device (such as a smart phone and a tablet device, and the like) with an AP function. Referring to Fig. 11, the device 1100 includes a processing component 1122 that further includes one or more processors, and memory resources represented by a memory 1132 for storing instructions, such as application programs, executable by the processing component 1122. The application programs stored in memory 1132 may include one or more modules, each of which corresponds to a set of instructions. Moreover, the processing component 1122 is configured to execute instructions for performing the above described method for controlling a signal transmission.

The device 1100 may also include a power component 1126 configured to perform power management of the device 1100, wired or wireless network interface(s) 1150 configured to connect the device 1100 to a network, and an input/output (I/O) interface 1158. The device 1100 may operate based on an operating system stored in the memory 1132.

After considering this description and carrying out the embodiments disclosed herein, those skilled in the art may easily anticipate other implementation aspects of the present disclosure. The present disclosure is meant to cover any variations, usage or adaptive change of these embodiments, and these variations, usage or adaptive change follow general concept of the present disclosure and include the common knowledge or the customary technical means in the technical field that is not disclosed in the present disclosure. The description and embodiments are only exemplary, and the scope of the invention is defined by the following claims.

## Claims

1. A method for controlling the signal transmission of a network access point, comprising:
detecting (102), at the access point, whether there is a terminal that requests to establish a wireless connection with the access point;
if there is not the terminal, switching (103) the beacon frame sending function of the access point to an off state, and maintaining reception of probe request frames at the access point; and
judging whether a wireless connection has been ever established with a sending terminal of the probe request frames when the probe request frames are received;
wherein if the wireless connection has been established, switching the sending function of the access point into an on state; and
wherein if the wireless connection has not been established, recording the accumulated number of probe request frames received from the sending terminal and switching the sending function into the on state when the accumulated number is greater than or equal to a preset number.

2. The method according to claim 1, wherein the detecting whether there is a terminal that requests to establish a wireless connection comprises:
detecting whether there is a terminal that requests to establish a wireless connection in a continuous time period of a preset time length.

3. The method according to claim 1 or 2, wherein the judging whether the wireless connection is established with the sending terminal of the probe request frames comprises:
acquiring identification information of the sending terminal of the probe request frames; and
finding whether a historical connection device that matches with the identification information of the sending terminal exists in a preset historical database;
wherein, if the historical connection device exists, judging that the wireless connection has been ever established.

4. The method according to claim 3, further comprising:
adding the identification information of the sending terminal into a preset blacklist if an operation of establishing the wireless connection with the sending terminal fails, when the wireless connection has been not ever established with the sending terminal;
wherein, a state switching operation of the sending function is irrelevant to the probe request frames received from a terminal in the blacklist.

5. An apparatus for controlling a signal transmission in a network access point, comprising:
a detection unit (51) configured to detect whether there is a terminal that requests to establish a wireless connection with the access point;
a processing unit (52) configured to switch a sending function of beacon frames by the access point into an off state, and maintain a reception of probe request frames as the access point in the case of detecting that there is not the terminal;
a judging unit (53) configured to judge whether a wireless connection has been ever established with a sending terminal of the probe request frames when the probe request frames are received;
a first switching unit (54) configured to switch the sending function into an open state when judged that the wireless connection has been ever established;
a recording unit (55) configured to record the accumulated number of the probe request frames received from the sending terminal when judged that the wireless connection has been not ever established; and
a second switching unit (56) configured to switch the sending function into the open state when the accumulated number are greater than or equal to a preset number.

6. The apparatus according to claim 5, wherein the detection unit comprises:
a detection sub-unit (511) configured to detect whether there is a terminal that requests to establish a wireless connection in a continuous time period of a preset time length.

7. The apparatus according to claim 5 or 6, wherein the judging unit comprises:
an acquisition sub-unit (531) configured to acquire identification information of the sending terminal of the probe request frames; and
a finding sub-unit (532) configured to find whether a historical connection device that matches with the identification information of the sending terminal exists in a preset historical database and if the historical connection device exists, judge that the wireless connection has been ever established.

8. The apparatus according to claim 5 or 7 further comprising:
an adding unit (57) configured to add the identification information of the sending terminal into a preset blacklist if an operation of establishing the wireless connection with the sending terminal fails, when the wireless connection has been not ever established with the sending terminal;
wherein, a state switching operation of the sending function is irrelevant to the probe request frames received from a terminal in the blacklist.

9. A computer program product stored on a computer usable medium, having computer code stored thereon which when executed on the processor of a terminal causes the terminal to perform the method of any one of claims 1 to 4.

## Patentansprüche

1. Verfahren zum Steuern der Signalübertragung eines Netzwerkzugangspunkts, das Folgendes aufweist:
an dem Zugangspunkt Erkennen (102), ob es ein Endgerät gibt, das den Aufbau einer drahtlosen Verbindung mit dem Zugangspunkt anfordert;
wenn es kein Endgerät gibt, Umschalten (103) der Beacon-Frame-Sendefunktion des Zugangspunkts in einen Aus-Zustand und Beibehalten des Empfangs von Sondierungsanfrage-Frames am Zugangspunkt und
Urteilen, ob eine drahtlose Verbindung jemals mit einem sendenden Endgerät der Sondierungsanfrage-Frames aufgebaut wurde, wenn die Sondierungsanfrage-Frames empfangen werden;
wobei, wenn die drahtlose Verbindung aufgebaut wurde, Umschalten der Sendefunktion des Zugangspunkts in einen Ein-Zustand und
wobei, wenn die drahtlose Verbindung nicht aufgebaut wurde, Aufzeichnen der angesammelten Anzahl von Sondierungsanfrage-Frames, die von dem sendenden Endgerät empfangen wurden, und Umschalten der Sendefunktion in den Ein-Zustand, wenn die angesammelte Anzahl größer oder gleich einer vorgegebenen Anzahl ist.

2. Verfahren nach Anspruch 1, wobei das Erkennen, ob es ein Endgerät gibt, das den Aufbau einer drahtlosen Verbindung anfordert, Folgendes aufweist:
Erkennen, ob es ein Endgerät gibt, das den Aufbau einer drahtlosen Verbindung in einem ununterbrochenen Zeitabschnitt einer vorgegebenen Zeitdauer anfordert.

3. Verfahren nach Anspruch 1 oder 2, wobei das Urteilen, ob die drahtlose Verbindung mit dem sendenden Endgerät der Sondierungsanfrage-Frames aufgebaut wird, Folgendes aufweist:
Erfassen von Kennungsinformationen des sendenden Endgeräts der Sondierungsanfrage-Frames und
Herausfinden, ob eine historische Verbindungsvorrichtung, die mit den Kennungsinformationen des sendenden Endgeräts übereinstimmt, in einer vorgegebenen historischen Datenbank besteht;
wobei, falls die historische Verbindungsvorrichtung besteht, Urteilen, dass die drahtlose Verbindung jemals aufgebaut wurde.

4. Verfahren nach Anspruch 3, das ferner Folgendes aufweist:
Hinzufügen von Kennungsinformationen des sendenden Endgeräts zu einer vorgegebenen Sperrliste, falls ein Vorgang des Aufbauens der drahtlosen Verbindung mit dem sendenden Endgerät erfolglos ist, wenn die drahtlose Verbindung mit dem sendenden Endgerät noch nie aufgebaut wurde;
wobei ein Zustandsumschaltvorgang der Sendefunktion für die von einem Endgerät auf der Sperrliste empfangenen Sondierungsanfrage-Frames irrelevant ist.

5. Vorrichtung zum Steuern einer Signalübertragung in einem Netzwerkzugangspunkt, die Folgendes aufweist:
eine Erkennungseinheit (51), die zum Erkennen konfiguriert ist, ob es ein Endgerät gibt, das den Aufbau einer drahtlosen Verbindung mit dem Zugangspunkt anfordert;
eine Verarbeitungseinheit (52), die konfiguriert ist zum Umschalten einer Sendefunktion von Beacon-Frames durch den Zugangspunkt in einen Aus-Zustand und Beibehalten eines Empfangs von Sondierungsanfrage-Frames als den Zugangspunkt im Fall, dass erkannt wird, dass es das Endgerät nicht gibt;
eine Urteilungseinheit (53), die konfiguriert ist zum Urteilen, ob eine drahtlose Verbindung jemals mit einem sendenden Endgerät der Sondierungsanfrage-Frames aufgebaut wurde, wenn die Sondierungsanfrage-Frames empfangen werden;
eine erste Schalteinheit (54), die konfiguriert ist zum Umschalten der Sendefunktion auf einen offenen Zustand, wenn geurteilt wird, dass die drahtlose Verbindung jemals aufgebaut wurde;
eine Aufzeichnungseinheit (55), die konfiguriert ist zum Aufzeichnen der angesammelten Anzahl der Sondierungsanfrage-Frames, die von dem sendenden Endgerät empfangen wurden, wenn geurteilt wird, dass die drahtlose Verbindung niemals aufgebaut wurde; und
eine zweite Schalteinheit (56), die konfiguriert ist zum Umschalten der Sendefunktion in den offenen Zustand, wenn die angesammelte Anzahl größer oder gleich einer vorgegebenen Anzahl ist.

6. Vorrichtung nach Anspruch 5, wobei die Erkennungseinheit Folgendes aufweist:
eine Erkennungsuntereinheit (511), die konfiguriert ist zum Erkennen, ob es ein Endgerät gibt, das den Aufbau einer drahtlosen Verbindung in einem ununterbrochenen Zeitabschnitt einer vorgegebenen Zeitdauer anfordert.

7. Vorrichtung nach Anspruch 5 oder 6, wobei die Urteilungseinheit Folgendes aufweist:
eine Erfassungsuntereinheit (531), die konfiguriert ist zum Erfassen von Kennungsinformationen des sendenden Endgeräts der Sondierungsanfrage-Frames; und
eine Herausfindungsuntereinheit (532), die konfiguriert ist zum Herausfinden, ob eine historische Verbindungsvorrichtung, die mit den Kennungsinformationen des sendenden Endgeräts übereinstimmt, in einer vorgegebenen historischen Datenbank besteht; und, falls die historische Verbindungsvorrichtung besteht, Urteilen, dass die drahtlose Verbindung jemals aufgebaut wurde.

8. Vorrichtung nach Anspruch 5 oder 7, die ferner Folgendes aufweist:
eine Hinzufügeeinheit (57), die konfiguriert ist zum Hinzufügen der Kennungsinformationen des sendenden Endgeräts zu einer vorgegebenen Sperrliste, falls ein Vorgang des Aufbauens der drahtlosen Verbindung mit dem sendenden Endgerät erfolglos ist, wenn die drahtlose Verbindung mit dem sendenden Endgerät noch nie aufgebaut wurde;
wobei ein Zustandsumschaltvorgang der Sendefunktion für die von einem Endgerät auf der Sperrliste empfangenen Sondierungsanfrage-Frames irrelevant ist.

9. Computerprogrammprodukt, das auf einem computernutzbaren Datenträger gespeichert ist, mit darauf gespeichertem Computercode, der bei Abarbeiten im Prozessor eines Endgeräts das Endgerät zum Durchführen des Verfahrens nach einem der Ansprüche 1 bis 4 veranlasst.

## Revendications

1. Procédé de commande de la transmission de signal d'un point d'accès réseau, comprenant :
détecter (102), au point d'accès réseau, s'il y a un terminal qui demande d'établir une connexion sans fil avec le point d'accès ;
s'il n'y a pas de terminal, commuter (103) la fonction d'émission de trame balise du point d'accès à un état hors circuit, et maintenir la réception de trames de requête de sondage au point d'accès ; et
estimer si une connexion sans fil a jamais été établie avec un terminal d'émission des trames de requête de sondage lorsque les trames de requête de sondage sont reçues ;
dans lequel si la connexion sans fil a été établie, commuter la fonction d'émission du point d'accès à un état en circuit ; et
dans lequel si la connexion sans fil n'a pas été établie, enregistrer le nombre accumulé de trames de requête de sondage reçues du terminal d'émission et commuter la fonction d'émission à l'état en circuit lorsque le nombre accumulé est plus grand ou égal à un nombre préréglé.

2. Procédé selon la revendication 1, dans lequel le fait de détecter s'il y a un terminal qui demande d'établir une connexion sans fil comprend :
détecter s'il y a un terminal qui demande d'établir une connexion sans fil dans une période de temps continue d'un longueur de temps préréglée.

3. Procédé selon la revendication 1 ou 2, dans lequel le fait d'estimer si la connexion sans fil est établie avec le terminal d'émission des trames de requête de sondage comprend :
acquérir des informations d'identification du terminal d'émission des trames de requête de sondage ; et
rechercher si un dispositif de connexion historique qui est assorti aux informations d'identification du terminal d'émission existe dans une base de données historique préréglée ;
dans lequel, si le dispositif de connexion historique existe, estimer que la connexion sans fil a jamais été établie.

4. Procédé selon la revendication 3, comprenant en outre :
ajouter les informations d'identification du terminal d'émission dans une liste de blocage préréglée si une opération d'établissement de la connexion sans fil avec le terminal d'émission échoue, lorsque la connexion sans fil n'a jamais été établie avec le terminal d'émission ;
dans lequel, une opération de commutation d'état de la fonction d'émission est sans rapport avec les trames de requête de sondage reçues d'un terminal dans la liste de blocage.

5. Appareil de commande de transmission de signal dans un point d'accès réseau, comprenant :
une unité de détection (51) configurée pour détecter s'il y a un terminal qui demande d'établir une connexion sans fil avec le point d'accès ;
une unité de traitement (52) configurée pour commuter une fonction d'émission de trames balises par le point d'accès à un état hors circuit, et maintenir une réception de trames de requête de sondage comme le point d'accès dans le cas du fait de détecter qu'il n'y a pas de terminal ;
une unité d'estimation (53) configurée pour estimer si une connexion sans fil a jamais été établie avec un terminal d'émission des trames de requête de sondage lorsque les trames de requête de sondage sont reçues ;
une première unité de commutation (54) configurée pour commuter la fonction d'émission en un état ouvert lorsqu'il est estimé que la connexion sans fil a jamais été établie ;
une unité d'enregistrement (55) configurée pour enregistrer le nombre accumulé de trames de requête de sondage reçues du terminal d'émission lorsqu'il est estimé que la connexion sans fil n'a jamais été établie ; et
une deuxième unité de commutation (56) configurée pour commuter la fonction d'émission en l'état ouvert lorsque le nombre accumulé est plus grand ou égal à un nombre préréglé.

6. Appareil selon la revendication 5, dans lequel l'unité de détection comprend :
une sous-unité de détection (511) configurée pour détecter s'il y a un terminal qui demande d'établir une connexion sans fil dans une période de temps continue d'une longueur de temps préréglée.

7. Appareil selon la revendication 5 ou 6, dans lequel l'unité d'estimation comprend :
une sous-unité d'acquisition (531) configurée pour acquérir des informations d'identification du terminal d'émission des trames de requête de sondage ; et
une sous-unité de recherche (532) configurée pour rechercher si un dispositif de connexion historique qui est assorti aux informations d'identification du terminal d'émission existe dans une base de données historique préréglée et si le dispositif de connexion historique existe, estimer que la connexion sans fil a jamais été établie.

8. Appareil selon la revendication 5 ou 7, comprenant en outre :
une unité d'ajout (57) configurée pour ajouter les informations d'identification du terminal d'émission dans une liste de blocage préréglée si une opération d'établissement de connexion sans fil avec le terminal d'émission échoue, lorsque la connexion sans fil n'a jamais été établie avec le terminal d'émission ;
dans lequel, une opération de commutation d'état de la fonction d'émission est sans rapport avec les trames de requête de sondage reçues d'un terminal dans la liste de blocage.

9. Produit de programme informatique stocké sur un support utilisable par ordinateur, ayant du code informatique stocké dessus qui lorsque exécuté sur le processeur d'un terminal fait que le terminal mette en oeuvre le procédé selon l'une quelconque des revendications 1 à 4.
